# EUROPEAN PATENT SPECIFICATION

(11) **EP 1 645 389 B1**
(45) Date of publication and mention of the grant of the patent: **09.05.2007**
(21) Application number: 04425764.0
(22) Date of filing: 11.10.2004
(51) Int. Cl.: B29C 44/42, B29C 45/24, B05B 15/02, B08B 1/04

(54) **Apparatus and method for cleaning the injection zone of a foaming mould**
Verfahren und Vorrichtung zum Reinigen von einer Injektionszone eines Schäumwerkzeuges
Appareil et procédé de nettoyage de la zone d'injection d'un moule de moussage

(43) Date of publication of application: 12.04.2006
(73) Proprietor: Tecnocad Progetti Spa, 10135 Torino (IT)
(72) Inventor: Palermi, Alberto, 10135 Torino (IT)
(74) Representative: Marchitelli, Mauro

(56) References cited:
- EP-A- 0 406 755
- US-A- 5 217 661
- PATENT ABSTRACTS OF JAPAN vol. 010, no. 187 (M-493), 2 July 1986 (1986-07-02) & JP 61 031219 A (HITACHI LTD), 13 February 1986 (1986-02-13)

## Description

The present invention relates to the field of the production of articles comprising at least one layer of foamed plastic material. Many articles for interior fittings of vehicles are formed by a support element made of rigid plastic material with a coating layer and a layer of foamed plastic material interposed between the coating layer and the rigid support element. Articles with a structure of this kind are, for example, some types of dashboards for vehicles, armrests for door panels for vehicles, and various types of components or coating elements for the interior of a vehicle.

Components of this kind are produced by means of foaming moulds including two half-moulds, movable relative to each other along a direction of opening/closing and provided with respective active surfaces. A support element of rigid plastic material previously produced by injection moulding is positioned against the active surface of a first half-mould and a coating layer is positioned against the active surface of the second half-mould. The two half-moulds are then closed and a mixture of foamable material is injected in a space existing between the coating layer and the rigid support element. The injection of the foamable mixture is effect by means of an injection head having a nozzle which communicates with an injection channel formed through one of the half-moulds.

In apparatuses of this kind it is important to prevent the formation of residues of foamed plastic material in the injection channel or on the nozzle of the injection head. Any residues could compromise the quality of the produced pieces.

JP-A-61031219 describes an apparatus according to the preamble of claim 1 and a method according to the preamble of claim 7.

A contemporary patent application by the same Applicant describes a method for producing a foamed article in which the support element of rigid plastic material of the component made of foamed material has an integral extension with a hole which communicates directly with the injection opening of the nozzle. In this way, the foamable plastic material is injected directly inside the integral extension of the rigid support element and any contact of the foamable material with the walls of the half-mould is prevented. This enables to maintain a perfect cleanliness of the walls of the injection channel of the half-mould. However, in the solution described in the contemporary patent application by the same Applicant, a drop of foamed plastic material remains on the surface of the shutter associated with the injection nozzle.

The object of the present invention is to provide an apparatus and a method which allow to perform in simple and rapid fashion the residual cleaning of the injection region in a foaming mould of the type described above.

According to the present invention, said object is achieved by an apparatus according to claim 1 and a method according to claim 7.

The characteristics and the advantages of the present invention shall become readily apparent in the detailed description that follows, provided purely by way of non limiting example, with reference to the accompanying drawings in which:
- Figure 1 is a schematic section showing a foaming mould at the end of the production of a foamed article,
- Figure 2 is an enlarged scale detail of the part indicated by the arrow II in Figure 1,
- Figure 3 schematically shows the step of cleaning the injection region by means of an apparatus according to the present invention,
- Figure 4 is an enlarged scale detail of the part indicated by the arrow IV in Figure 3,
- Figure 5 is a detail, enlarged even further, of the part indicated by the arrow V in Figure 4,
- Figure 6 shows the injection region at the end of the cleaning operation, and
- Figures 7 and 8 are two partial sections of an apparatus according to the invention in two operative positions.

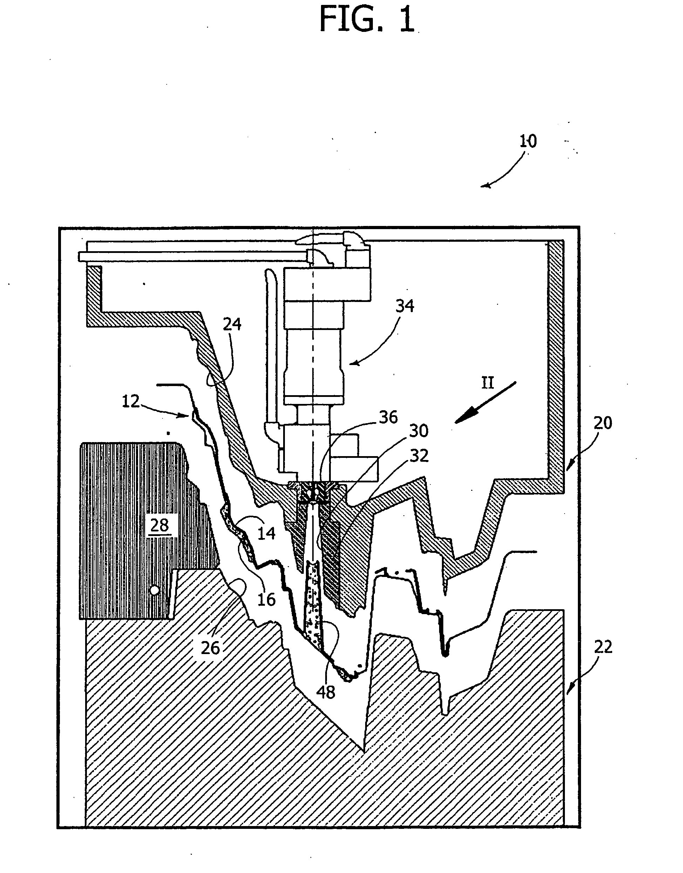

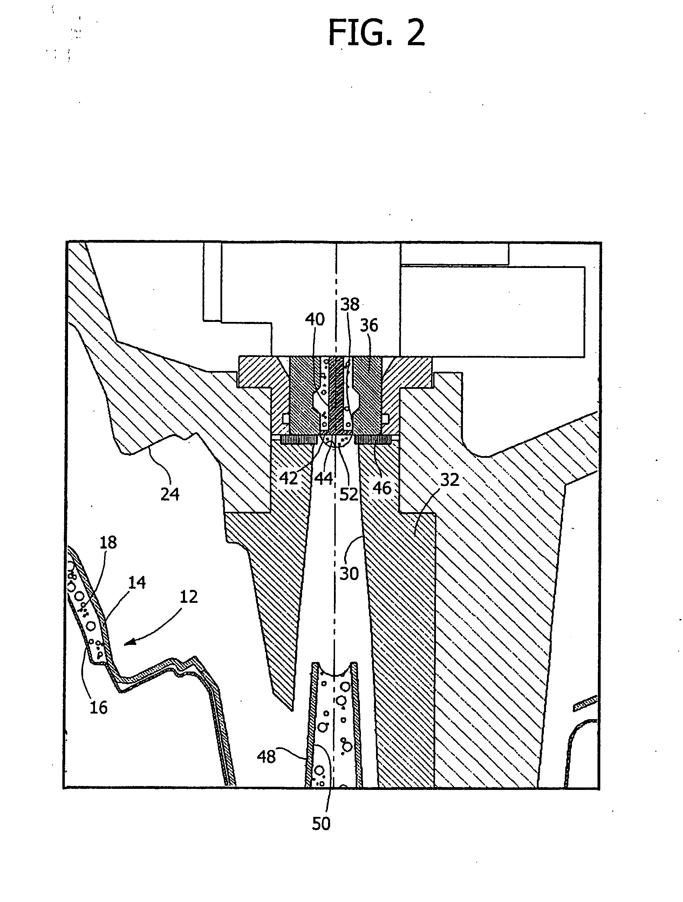

With reference to Figures 1 and 2, the reference number 10 designates a foaming mould for producing foamed articles 12 each of which comprises a rigid support element 14, a coating layer 16 and a layer of foamed plastic material 18 interposed between the coating layer 16 and the rigid support element 14. The mould 10 comprises an upper half-mould or punch 20 and a lower half-mould or die 22. The half-moulds 20, 22 are provided with respective active surfaces 24, 26. The active surface 26 of the lower half-mould 22 extends in part on a horizontally movable carriage 28. The upper half-mould 20 is movable relative to the lower half-mould 22 along a vertical direction of opening/closing.

With reference to Figures 1 and 2, the upper half-mould 20 comprises a channel 30 of generically cone frustum shape obtained in an injection bushing 32 fastened to the upper half-mould 20 or directly in the wall of the upper half-mould 20.

The upper half-mould 20 bears an injection head 34 having a nozzle 36 provided with an injection hole 38. With reference in particular to Figure 2, the nozzle 36 is provided with a shutter 40 movable in vertical direction between a closed position and an open position. The shutter 40 has a head 42 slidable in the injection hole 38 and having a planar lower surface 44.

With reference again to Figure 2, a sealing gasket 46 is positioned between the lower surface of the nozzle 36 and the upper surface of the injection bushing 32.

As is described in detail in a contemporary patent application by the same Applicant, the rigid support element 14 has an integral extension 48 which is inserted in the channel 30 when the support element 14 is positioned in contact with the active surface 24 of the upper half-mould 20 in the closed mould configuration. During the production of a foamed article 12, the channel 38 communicates directly with the inner hole 50 of the integral extension 48. As explained in detail in the contemporary patent application by the same Applicant, the foamable mixture which is injected through the injection hole 38 of the nozzle 36 never comes in direct contact with the wall of the channel 30. Said wall therefore remains perfectly clean and does not requires cleaning operations for the removal of residues of foamed material. The sole residue of foamed plastic material in the injection area is constituted by a drop adhering to the lower surface 44 of the shutter 40.

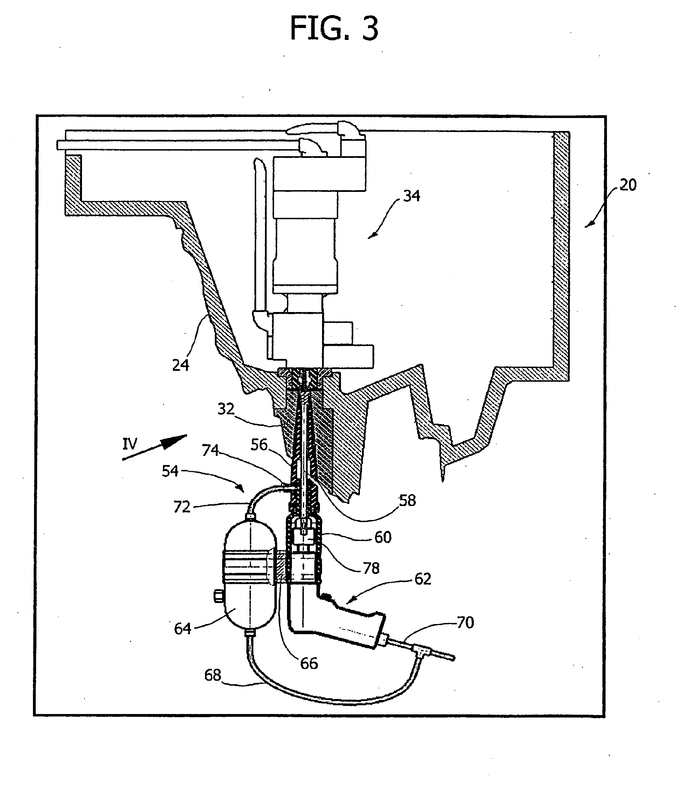

Figure 3 schematically shows an apparatus 54 according to the present invention, specifically designed for the removal of the residue of foamed plastic material 52 adhering to the surface 44 of the shutter 40. The apparatus 54 comprises a guide element 56, a shaft 58 rotatably mounted inside the guide element 56, a support 60 and a conventional pneumatic drill 62. The apparatus 54 can also be provided with a tank 64 containing a detaching product. The support 60 is fastened on the outer body of the pneumatic drill 62. The tank of detaching product 64 is fastened to the support 60 by means of a flange 66. A first tube 68 connects the tank of detaching product 64 to a pneumatic line 70 which feeds compressed air to the pneumatic drill 62. A second tube 72 connects the tank of detaching product 64 to a lateral hole 74 of the guide element 56.

With reference to Figures 7 and 8, the shaft 58 has a first end 76 engaged in the spindle 78 of the pneumatic drill. A second end of the shaft 58 has a tip 80 provided with projections able to remove by scraping the residue of foamed plastic material adhering to the lower surface of the shutter. The tip 80 has a threaded lateral portion 82 which is slidable in a hole 84 with smooth walls at the end of the guide element 56. The guide element 56 has a lower portion 86 which slidably engages in longitudinal direction a tubular portion 88 of the support 60. A pin 90 engages a longitudinal groove 92 and forms an end stop of the guide element 56 relative to the support 60. A helical compression spring 94 is positioned between the guide element 56 and the support 60 and tends to bias the guide element 56 in the position illustrated in Figure 7. In this position the tip 80 of the shaft 58 is recessed relative to the upper edge of the guide element 56. In the other end stop position shown in Figure 8 the tip 80 projects from the upper edge of the guide element 56.

With reference again to Figures 7 and 8, a first gasket 96 is positioned between the tubular portion 88 of the support 60 and the shaft 58. A second gasket 98 is interposed between the guide element 56 and the tubular portion 88 of the support 60.

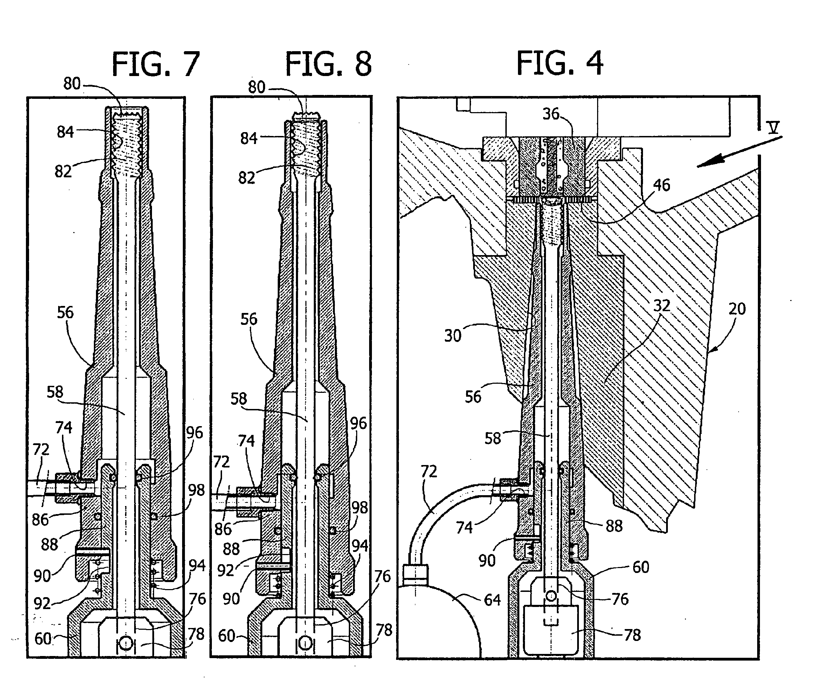

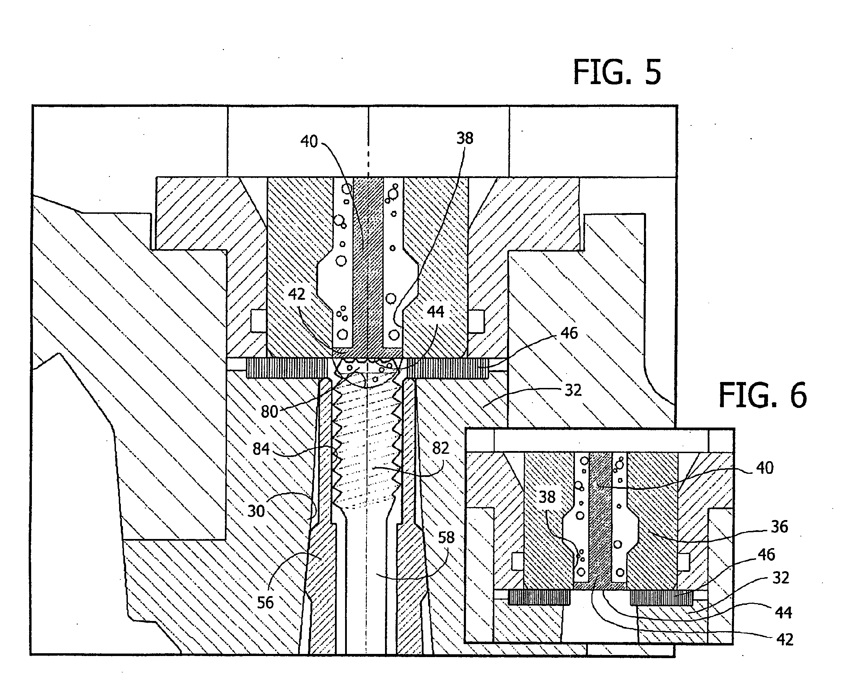

The operation of the cleaning apparatus 54 is shown with reference to Figures 4 and 5. The guide element 56 is inserted in the channel 30. The shape of the guide element 56 is such that the upper edge of the guide element 56 is positioned just below the gasket 46 in the position of maximum penetration of the guide element 56 in the channel 30. In this position, the shaft 58 is driven to rotate by means of the pneumatic drill 62 and simultaneously the drill 62 is pushed upwards in such a way as to cause the tip 80 to project from the upper edge of the guide element 56. As shown in Figure 5, the rotation of the tip 80 removes the formation of foamed plastic material 52 from the lower surface 44 of the shutter 40. Figure 6 shows the shutter at the end of the cleaning operation. Simultaneously or after the removal of the formation of foamed plastic material 52, it is possible to apply detaching product through the guide element 56, activating the passage of compressed air through the tank 64. The threaded portion 82 allows to obtain a self-cleaning of the tool since it ejects outwards dusts and particles of plastic material.

The cleaning apparatus 54 allows to clean the injection area in rapid and effective fashion and it has the advantage of preventing damage to the gasket 46.

## Claims

1. An apparatus for cleaning the injection zone of a foaming mould, which comprises:
- a guide element adapted to a half-mould (20), and
- a cleaning tip (80) mounted rotatable relative to the guide element (56) and able to remove a residue of foamed plastic material (52) adhering to a shutter (40) of an injection nozzle (36) situated at the inner end of a channel (30), **characterised by** that the guide element (56) has an elongated shape adapted to be inserted in said channel (30) of the said half-mould (20).

2. Apparatus as claimed in claim 1, **characterised in that** it comprises a support (60) fastened to the outer body of a pneumatic drill (62) and bearing a rotatable shaft (58) having a first end (76) coupled to the spindle (78) of said pneumatic drill (62) and provided at a second end with said cleaning tip (80).

3. Apparatus as claimed in claim 2, **characterised in that** the guide element (56) is slidable in longitudinal direction relative to the support (60) between a position in which said cleaning tip (80) is recessed relative to an outer edge of the guide element (56) and a second position in which said cleaning tip (80) projects from the outer edge of the guide element (56).

4. Apparatus as claimed in claim 1, **characterised in that** it comprises a tank of detaching product (64) connected to a compressed air line (70).

5. Apparatus as claimed in claim 4, **characterised in that** the tank of detaching product (64) is connected to an inner hole of the guide element (56).

6. Apparatus as claimed in claim 1, **characterised in that** the cleaning tip (80) comprises a threaded segment (82) which co-operates with a smooth-walled hole (84) of the guide element (56).

7. A method for cleaning the injection zone of a foaming mould by actuating in rotation a cleaning tip (80) rotatably housed in a guide element (56), **characterised in that** it comprises the step of
inserting said guide element (56) into an injection channel (30) of a half-mould (20).

8. Method as claimed in claim 7, **characterised in that** it comprises the step of axially displacing the cleaning tip (80) relative to the guide element (56) between a position in which the tip (80) is recessed relative to an upper edge of the guide element (56) and a position in which the cleaning tip (80) projects beyond the edge of the guide element (56).

9. Method as claimed in claim 7, **characterised in that** it comprises the step of delivering through the guide element (56) a detaching product by means of a flow of compressed air.

## Patentansprüche

1. Vorrichtung zum Reinigen des Einspritzbereichs einer Schäumform, welche umfasst:
ein Führungselement, das an eine Halbform (20) angepasst ist, sowie
eine Reinigungsdüse (80), die drehbar bezüglich des Führungselements (56) angebracht ist, und einen Rückstand von aufgeschäumtem Kunststoff (52) entfernen kann, der an einem Verschluss (40) einer Einspritzdüse (36) anhaftet, die sich am inneren Ende eines Kanals (30) befindet,
**dadurch gekennzeichnet,**
**dass** das Führungselement (56) eine gestreckte Form hat, die geeignet ist, um in besagtem Kanal (30) besagter Halbform (20), eingebaut zu werden.

2. Vorrichtung, wie beansprucht in Anspruch 1,
**dadurch gekennzeichnet,**
**dass** diese eine Halterung (60) umfasst, die am Außengehäuse eines Druckluftbohrers (62) befestigt ist und eine drehbare Welle (58) mit einem ersten Ende (76) lagert, das an eine Spindel (78) besagten Druckluftbohrers (62) gekoppelt ist und an einem zweiten Ende mit besagter Reinigungsdüse (80) versehen ist.

3. Vorrichtung, wie beansprucht in Anspruch 2,
**dadurch gekennzeichnet,**
**dass** das Führungselement (56) in Längsrichtung bezüglich der Halterung (60) zwischen einer Position, in der besagte Reinigungsdüse (80) in Bezug auf den äußeren Rand des Führungselements (56) zurückgesetzt ist und einer zweiten Position, in der besagte Reinigungsdüse (80) über den äußeren Rand des Führungselements (56) ragt, verschiebbar ist.

4. Vorrichtung, wie beansprucht in Anspruch 1,
**dadurch gekennzeichnet,**
**dass** sie einen Behälter von lösendem Produkt (64) umfasst, der an eine Druckluftleitung (70) angeschlossen ist.

5. Vorrichtung, wie beansprucht in Anspruch 4,
**dadurch gekennzeichnet,**
**dass** sie einen Behälter von lösendem Produkt (64) umfasst, der an eine innere Bohrung des Führungselements (56) angeschlossen ist.

6. Vorrichtung, wie beansprucht in Anspruch 1,
**dadurch gekennzeichnet,**
**dass** die Reinigungsdüse (80) einen Gewindeabschnitt (82) umfasst, der mit einer glattwandigen Bohrung (84) des Führungselements (56) zusammenwirkt.

7. Verfahren zum Reinigen des Einspritzbereichs einer Schäumform, durch das in Rotation Versetzen einer Reinigungsdüse (80), die drehbar in einem Führungselement (56) angebracht ist,
**dadurch gekennzeichnet,**
**dass** es den Schritt des Einbauens des besagten Führungselements (56) in einen Einspritzkanal (30) einer Halbform (20) umfasst.

8. Verfahren, wie beansprucht in Anspruch 7,
**dadurch gekennzeichnet,**
**dass** es den Schritt des axialen Verschiebens der Reinigungsdüse (80) bezüglich des Führungselements (56) zwischen einer Position, in welcher die Düse (80) bezüglich des äußeren Randes des Führungselements (56) zurückgesetzt ist und einer Position, in der die Reinigungsdüse (80) über den äußeren Rand des Führungselements (56) ragt, umfasst.

9. Verfahren, wie beansprucht in Anspruch 7,
**dadurch gekennzeichnet,**
**dass** es den Schritt der Abgabe eines lösenden Produkts durch das Führungselement (56) hindurch, mittels eines Druckluftstroms, umfasst.

## Revendications

1. Appareil destiné à nettoyer la zone d'injection d'un moule de formation de mousse, qui comporte:
- un élément de guidage prévu sur un demi moule (20), et
- un embout de nettoyage (80) monté de façon rotative par rapport à l'élément de guidage (56) et capable d'enlever un résidu de matière plastique en mousse (52) qui adhère sur un obturateur (40) d'une buse injection (36) située au niveau de l'extrémité interne d'un canal (30), **caractérisé en ce que** l'élément de guidage (56) a une forme allongée prévue pour être insérée dans ledit canal (30) dudit demi moule (20).

2. Appareil selon la revendication 1, **caractérisé en ce qu'**il comprend un support (60) fixé sur le corps extérieur d'une perceuse pneumatique (62) et portant un arbre rotatif (58) ayant une première extrémité (76) reliée à la broche (78) de ladite perceuse pneumatique (62) et pourvu au niveau d'une deuxième extrémité dudit embout de nettoyage (80).

3. Appareil selon la revendication 2, **caractérisé en ce que** l'élément de guidage (56) peut coulisser dans la direction longitudinale par rapport au support (60) entre une position dans laquelle ledit embout de nettoyage (80) est renfoncé par rapport à un bord extérieur de l'élément de guidage (56) et une deuxième position dans laquelle ledit embout de nettoyage (80) dépasse du bord extérieur de l'élément de guidage (56).

4. Appareil selon la revendication 1, **caractérisé en ce qu'**il comprend un réservoir de produit de détachement (64) relié à une conduite d'air comprimé (70).

5. Appareil selon la revendication 4, **caractérisé en ce que** le réservoir de produit de détachement (64) est relié à un trou interne de l'élément de guidage (56).

6. Appareil selon la revendication 1, **caractérisé en ce que** l'embout de nettoyage (80) comprend un segment fileté (82) qui coopère avec un trou à paroi lisse (84) de l'élément de guidage (56).

7. Procédé de nettoyage de la zone d'injection d'un moule de formation de mousse, en actionnant en rotation un embout de nettoyage (80) monté de façon rotative dans un élément de guidage (56), **caractérisé en ce qu'**il comprend l'étape consistant à insérer ledit élément de guidage (56) dans un canal d'injection (30) d'un demi moule (20).

8. Procédé selon la revendication 7, **caractérisé en ce qu'**il comprend l'étape de déplacement axial de l'embout de nettoyage (80) par rapport à l'élément de guidage (56) entre une position dans laquelle l'embout (80) est renfoncé par rapport à un bord supérieur de l'élément de guidage (56) et une position dans laquelle l'embout de nettoyage (80) dépasse au-delà du bord de l'élément de guidage (56).

9. Procédé selon la revendication 7, **caractérisé en ce qu'**il comprend l'étape consistant à délivrer à travers l'élément de guidage (56) un produit de détachement au moyen d'un écoulement d'air comprimé.
